# EUROPEAN PATENT APPLICATION

(11) **EP 2 327 757 A1**
(43) Date of publication of application: **01.06.2011**
(21) Application number: 09838774.9
(22) Date of filing: 21.01.2009
(51) Int. Cl.: C11D 3/43, B41J 2/165, C09D 9/04, C11D 1/68, C11D 17/08

(54) **INK CLEANING LIQUID**

(71) Applicant: Mimaki Engineering Co., Ltd., Tomi-shi, Nagano 389-0512 (JP)
(72) Inventor: MITSUISHI, Tomoko, Tomi-shi Nagano 389-0512 (JP); YAMADA, Ryuji, Tomi-shi Nagano 389-0512 (JP)
(74) Representative: Gendron, Vincent Christian
(86) International application number: PCT/JP2009/050847
(87) International publication number: WO 2010/084582

(57) **Abstract**

Disclosed is an ink cleaning liquid that contains ethylene glycol monobutyl ether acetate and a surfactant.

## Description

### TECHNICAL FIELD

The present invention relates to an ink cleaning liquid.

### BACKGROUND ART

In an inkjet recording device, a recording medium such as a sheet and a fabric material moves over a platen, and while a carriage to which a print head is attached is moving on the recording medium that is mounted on the platen, an ink is sprayed from nozzles provided at the bottom of an inkjet head. The sprayed ink lands in a dot shape on a predetermined area of the recording medium. In this manner, characters or images are formed on the recording medium from accumulation of ink that lands in dot shape.

In the inkjet recording device described above, the ink is sprayed from the nozzles having a minute diameter of micrometer (µm) scale; therefore, coagulated ink or dried ink have a tendency to adhere easily in the vicinity of a nozzle tip or inside an ink flow path. The coagulated ink or the dried ink clogs the nozzles, thus causing a defect such as distortion of the characters or the images. To prevent this from happening, an ink cleaning liquid is normally used to clean the vicinity of the nozzle tip or inside of the ink flow path (see Patent Documents 1 to 6).
[Patent Document 1] Japanese Patent Application Laid-open No. H10-286977
[Patent Document 2] Japanese Patent Application Laid-open No. H11-157087
[Patent Document 3] Japanese Patent Application Laid-open No. 2005-23196
[Patent Document 4] Japanese Patent Application Laid-open No. 2007-119658
[Patent Document 5] Japanese Patent Application Laid-open No. 2007-169314
[Patent Document 6] Japanese Patent Application Laid-open No. 2007-313716

### DISCLOSURE OF INVENTION

### PROBLEM TO BE SOLVED BY THE INVENTION

However, the inventors made dedicated investigations and discovered that conventional ink cleaning liquids have the following problems.

With the conventional ink cleaning liquid, it is difficult to sufficiently clean the ink adhering in the vicinity of the nozzle tip or inside the ink flow path.

When the ink is cleaned with the conventional ink cleaning liquid, the ink, which coagulates again due to its mixing with the ink cleaning liquid, has a tendency to adhere in the vicinity of the nozzle tip or inside the ink flow path. Moreover, as time passes while the ink is in a mixed state with the ink cleaning liquid, coagulation of the ink is likely to increase.

When the conventional ink cleaning liquid is stored for a long period of time, there is a possibility that an acidified ink cleaning liquid that is formed due to decrease in a pH of the ink cleaning liquid during storage, corrodes members (hereinafter, abbreviated as device member, depending on the case) constituting the inkjet recording device. For example, when the inkjet head with the ink cleaning liquid adhering thereto is stored for a long period of time, there is a possibility of a metal such as Ti used for the inkjet head getting corroded by the ink cleaning liquid.

The present invention has been made in view of such conventional technical problems and it is an object of the present invention to provide an ink cleaning liquid that has an excellent cleaning capability and that can suppress coagulation of ink when it is mixed with the ink and that does not corrode a device member easily.

### MEANS FOR SOLVING PROBLEM

To achieve the object described above, an ink cleaning liquid according to the present invention contains ethylene glycol monobutyl ether acetate and a surfactant.

The ink cleaning liquid according to the present invention has an excellent cleaning capability. It can suppress coagulation of an ink when it is mixed with the ink and does not corrode a device member easily.

The ink cleaning liquid according to the present invention should preferably be used to clean an ink that contains ethylene glycol monobutyl ether acetate and a pigment.

Remarkable effects of the present invention can be obtained when the ink cleaning liquid according to the present invention that contains ethylene glycol monobutyl ether acetate is used to clean an ink that similarly contains ethylene glycol monobutyl ether acetate as a primary solvent.

In the present invention, the surfactant content should preferably be 0.1 mass % to 5 mass %, and more preferable be 1.0 mass %. The effects of the present invention can be easily obtained with such surfactant content.

In the present invention, the surfactant should preferably be an acetylene glycol surfactant. The effects of the present invention can be easily obtained with such surfactant.

### ADVANTAGES OF THE INVENTION

According to the present invention, an ink cleaning liquid can be provided that has an excellent cleaning capability and that can suppress coagulation of an ink when mixed with the ink and does not corrode a device member easily.

### BRIEF DESCRIPTION OF DRAWINGS

[Fig. 1] Fig. 1 is a partial schematic perspective view of an inkjet recording device.
[Fig. 2] Fig. 2A is a photograph of solid contents of an ink in a Petri dish before dribbling an ink cleaning liquid according to the present invention; Fig. 2B is a photograph of the solid contents of the ink in the Petri dish after 2 milliliter (ml) of the ink cleaning liquid is dribbled; Fig. 2C is a photograph of the solid contents of the ink in the Petri dish after 4 ml of the ink cleaning liquid is dribbled; and Fig. 2D is a photograph of the solid contents of the ink after 4 ml of the ink cleaning liquid is dribbled and liquid compound is removed from the Petri dish.
[Fig. 3] Fig. 3A is a photograph of a wiper with the solid contents of the ink adhering thereto; and Fig. 3B is a photograph of the wiper after the ink cleaning liquid according to the present invention is dribbled and the solid contents of the ink are wiped with a cotton swab.
[Fig. 4] Fig. 4A is a photograph of a tube with the solid contents of the ink adhering to inner walls; and Fig. 4B is a photograph of the tube after 15 ml of the ink cleaning liquid according to the present invention is passed through it.

### EXPLANATIONS OF LETTERS OR NUMERALS

2: Inkjet device, 4: Cap, 6: Dropper, 8: Solid contents of ink, 10: Portion of wiper on which ink cleaning liquid is dribbled and solid contents of ink are removed, 12: Tube

### BEST MODE(S) FOR CARRYING OUT THE INVENTION

An ink cleaning liquid according to an embodiment of the present invention contains ethylene glycol monobutyl ether acetate and a surfactant. The ink cleaning liquid can further contain water, a moisturizing agent, a preservative agent, an antifungal agent, etc.

As compared to water, ethylene glycol monobutyl ether acetate has an excellent capability to dissolve or disperse coagulated ink or dried ink in the ink cleaning liquid.

The surfactant enhances a wettability of the ink cleaning liquid. Due to this, the ink cleaning liquid easily adheres to or infiltrates into the coagulated ink or the dried ink formed near a nozzle tip or inside an ink flow path. Therefore, the coagulated ink or the dried ink can be easily cleaned.

When a conventional ink cleaning liquid that contains ethylene glycol monoethyl ether acetate instead of ethylene glycol monobutyl ether acetate is used, an acidified ink cleaning liquid that is formed due to decrease in a pH of the ink cleaning liquid during storage, is likely to corrode a device member.

When a conventional ink cleaning liquid that contains diethylene glycol monobutyl ether acetate instead of ethylene glycol monobutyl ether acetate is used, the ink that is mixed with the ink cleaning liquid is likely to coagulate.

When a conventional ink cleaning liquid that contains 1-(2-methoxy-2-methylethoxy)-2-propanol instead of ethylene glycol monobutyl ether acetate is used, the acidified ink cleaning liquid that is formed due to decrease in the pH of the ink cleaning liquid during storage, is likely to corrode the device member and the ink that is mixed with the ink cleaning liquid is likely to coagulate.

On the other hand, in the embodiment described above, the cleaning capacity of the ink cleaning liquid is enhanced by using both ethylene glycol monobutyl ether acetate and the surfactant as compared to the conventional ink cleaning liquid. Due to this, coagulation of the ink can be restrained when the ink is mixed with the ink cleaning liquid and corrosion of the device member due to the ink cleaning liquid can also be restrained.

Ethylene glycol monobutyl ether acetate content can be suitably adjusted according to a form of the target of cleaning and a composition of the ink. However, the ethylene glycol monobutyl ether acetate content should preferably be 90 mass % to 98 mass % of the total mass of the ink cleaning liquid. If it is not within this range, effects of the present invention are likely to reduce.

At least one type of surfactant from among an anionic surfactant, a cationic surfactant, and a nonionic surfactant can be used as the surfactant. Among these surfactants, the nonionic surfactant should preferably be used. The nonionic surfactant should preferably be an acetylene glycol surfactant. The effects of the present invention can be easily obtained by using acetylene glycol.

Surfynol 82, 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, and GA (these are all the names of the products manufactured by Air Products and Chemicals Inc.) can be used as acetylene glycol.

Furthermore, a fluorochemical surfactant can be used as the nonionic surfactant. Megafac F470, megafac F471, megafac F472SF, megafac F474, megafac F475, megafac F477, megafac F478, megafac F479, megafac F483, and megafac F84 (these are all the names of the products manufactured by Dainippon Ink) can be used as the fluorochemical surfactant.

The surfactant content can be suitably adjusted according to a form of the target of cleaning, and the composition of the ink. However, the surfactant content should preferably be 0.1 mass % to 5 mass % of the total mass of the ink cleaning liquid. It is more preferable that the surfactant content be 1.0 mass %. The effects of the present invention can be easily obtained with such surfactant content. If the surfactant content is not within this range, the effects of the present invention are likely to reduce.

The ink cleaning liquid according to the present embodiment should preferably be used for cleaning an ink that contains ethylene glycol monobutyl ether acetate and a pigment.

The compatibility of the ink and the ink cleaning liquid is enhanced by using the ink cleaning liquid that contains ethylene glycol monobutyl ether acetate that is a primary solvent of the ink to be cleaned. Remarkable effects of the present invention can be obtained with such ink cleaning liquid.

The ink that is to be cleaned with the ink cleaning liquid according to the present embodiment can also contain, by taking into consideration a discharge stability of the ink and drying characteristic of the ink on a desired recording medium, other solvents in addition to ethylene glycol monobutyl ether acetate that is the primary solvent. A solvents content in the ink should preferably be 50 mass % to 99 mass % of the total mass of the ink.

The ink can contain colorants such as a dye and the pigment as per the requirement. Dyes and the pigments of inorganic and organic types that can be used in a general inkjet recording device can be used as the colorants. A colorant content can be adjusted so as not to affect the discharge stability of the ink and be suitable for a desired printing density. However, the colorant content should preferably be 0.1 mass % to 15 mass % of the total mass of the ink.

In addition to the components described above, the ink can also contain, as per the requirement, additives such as a conductivity regulating agent, a surfactant, an ultraviolet absorbing agent, a defoaming agent, and an antioxidizing agent.

An inkjet head cleaning method that uses the ink cleaning liquid according to the present embodiment described above is explained below with reference to the accompanying drawings. Positional relations such as up, down, right, and left are based on positional relations shown in the drawings unless otherwise noted. Furthermore, dimensions and scales of the drawings are not limited to those shown in the drawings.

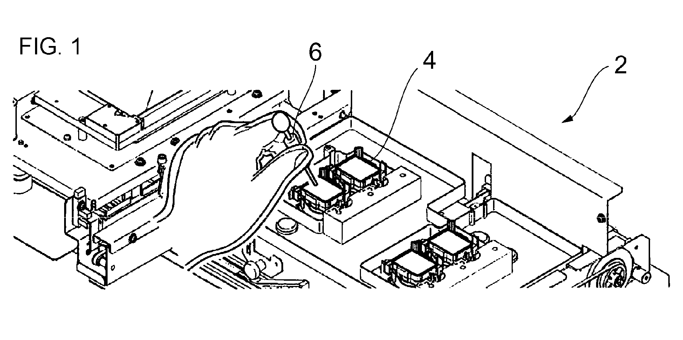

Fig. 1 is a partial schematic perspective view of an inkjet recording device 2.

For cleaning an inkjet head of the inkjet recording device 2, first, the ink cleaning liquid according to the present embodiment is injected using a dropper 6 into a cap 4 arranged in a service area of the inkjet recording device 2. Next, the inkjet head (not shown) is immersed in the ink cleaning liquid that is filled in the cap 4. As a result, the coagulated ink or the dried ink adhering near the nozzle tip or inside the ink flow path dissolves and disperses in the ink cleaning liquid and is removed from the nozzle tip or inside of the ink flow path.

Meanwhile, instead of using the dropper 6, the ink cleaning liquid can be sprayed into the cap 4 using a cleaning head that is arranged parallel to the inkjet head in a carriage.

Exemplary embodiments of the ink cleaning liquid according to the present invention are explained above; however, the present invention is not limited to these embodiments.

For example, flushed material such as the ink, dust, and lint adhering to a wiper that cleans the inkjet head can even be flushed with the ink cleaning liquid according to the present invention. In this case, the ink cleaning liquid can be sprayed onto the wiper using the dropper or the cleaning head. The flushed material that is flushed from the wiper is collected in a receiving plate arranged right below the wiper. The flushed material is then passed through a drain flow path (tube) that communicates with inside of the receiving plate and is drained outside the receiving plate. The ink, etc. adhering to the receiving plate or inside the tube can also be flushed with the ink cleaning liquid according to the present invention.

Furthermore, an ink cartridge that is filled with the ink cleaning liquid according to the present invention can be inserted in a slot of the inkjet recording device and all paths (for example, an ink supply path, a damper, inside a head, etc.) between the ink cartridge and the inkjet head can be cleaned with the ink cleaning liquid.

### (Examples)

The present invention is more particularly explained based on examples and comparative examples given below. However, the present invention is not limited to these examples.

### Example 1

Ethylene glycol monobutyl ether acetate in which acetylene glycol (manufactured by Air Products and Chemicals Inc., Product name: surfynol 104DPM) is added is prepared as an ink cleaning liquid (hereinafter, referred to as ink cleaning liquid A, depending on the case) of Example 1. An acetylene glycol content in the ink cleaning liquid is set to 1.0 mass % of the total mass of the ink cleaning liquid.

A compound liquid A1 is obtained by mixing 2 grams (g) of the ink cleaning liquid A and 40 g of ion exchange water and stirring for five minutes with a stirrer.

After the compound liquid A1 is filtered using a filter, the pH of the compound liquid A1 is measured with a pH measuring instrument. Results are shown in Table 1.

Thereafter, the compound liquid A1 obtained after filtration is subjected to a thermal accelerated deterioration process. In the thermal accelerated deterioration process, the compound liquid A is retained for 12 days in an environment with a temperature of about 60°C and a humidity of about 45%. The thermal accelerated deterioration process corresponds to a process in which the compound liquid A1 is retained for six months in the normal environment.

After completion of the thermal accelerated deterioration process, the pH of the compound liquid A1 is measured with a pH measuring instrument. The results are shown in Table 1.

### Comparative Example 1

A mixture of 1-(2-methoxy-2-methylethoxy)-2-propanol and its isomer is prepared as an ink cleaning liquid (hereinafter, referred to as ink cleaning liquid B, depending on the case) of Comparative Example 1. When this mixture was analyzed using the technique of gas chromatography, no surfactants were detected in the ink cleaning liquid B.

A compound liquid B1 is obtained by mixing 2 g of the ink cleaning liquid B and 40 g of ion exchange water and stirring for five minutes with a stirrer.

After the compound liquid B1 is filtered using the filter, the pH of the compound liquid B1 is measured with a pH measuring instrument. Results are shown in Table 1.

As in Example 1, the compound liquid B1 obtained after filtration is subjected to the thermal accelerated deterioration process. After completion of the thermal accelerated deterioration process, the pH of the compound liquid B1 is measured with a pH measuring instrument. The results are shown in Table 1.

**Table 1**

| Table 1 | pH | |
|---|---|---|
| | Before thermal accelerated deterioration | After thermal accelerated deterioration |
| Example 1 | 6.69 | 7.00 |
| Comparative Example 1 | 7.10 | 6.66 |

As can be affirmed from Table 1, in Example 1, the pH of the compound liquid A1 is not reduced during the thermal accelerated deterioration process and the compound liquid A1 is not acidified. On the other hand, in Comparative Example 1, it is affirmed that the pH of the compound liquid B1 is reduced during the thermal accelerated deterioration process and the compound liquid B1 is acidified.

Thus, it is affirmed that the ink cleaning liquid of Example 1 corrodes the device member less compared to the ink cleaning liquid of Comparative Example 1.

### Example 2a

A BS ink that contains a pigment, ethylene glycol monobutyl ether acetate that is the primary solvent, and a dispersive agent is prepared. A compound liquid A2 is prepared by mixing the BS ink and the ink cleaning liquid A. A mass ratio of the BS ink and the ink cleaning liquid A in the compound liquid A2 is set to 1:9.

A mean volume particle diameter MV, a mean number particle diameter MN, a mean area particle diameter MA of particles included in the compound liquid A2, and a particle diameter D50 whose cumulative rate from the small particle diameter side is 50% in a volume based particle size distribution of the particles are, respectively, measured. Measurement results are shown in Table 2. A particle size analyzer (MICROTRAC UPA-EX150) manufactured by Nikkiso Co., Ltd. is used to measure the diameter of each particle.

As in Example 1, the compound liquid A2 is subjected to the thermal accelerated deterioration process.

MV, MN, MA, and D50 of the particles included in the compound liquid A2 are, respectively, measured after the thermal accelerated deterioration process is completed. A change ratio of MV, MN, MA, and D50 before and after the thermal accelerated deterioration process is calculated. Results are shown in Table 2.

### Comparative Example 2a

A compound liquid B2 is prepared by mixing the BS ink and the ink cleaning liquid B in a mass ratio of 1:9.

By a method similar to that of Example 2a, MV, MN, MA, D50, and change ratios thereof before and after the thermal accelerated deterioration process implemented for the compound liquid B2 are calculated. Results are shown in Table 2.

**Table 2**

| Table 2 | Particle diameter (µm) | Before thermal accelerated deterioration | After thermal accelerated deterioration | Change ratio (%) |
|---|---|---|---|---|
| Example 2a | MV | 0.1568 | 0.1521 | -2.997 |
| | MN | 0.0945 | 0.0804 | -14.921 |
| | MA | 0.1308 | 0.1203 | -8.028 |
| | D50 | 0.1451 | 0.1398 | -3.653 |
| Comparative Example 2a | MV | 0.1640 | 0.1588 | -3.171 |
| | MN | 0.0964 | 0.1044 | 8.299 |
| | MA | 0.1346 | 0.1367 | 1.560 |
| | D50 | 0.1485 | 0.1479 | -0.404 |

### Example 2b

Apart from mixing the BS ink and the ink cleaning liquid A in a mass ratio of 1:1, MV, MN, MA, D50, and change ratios thereof before and after the thermal accelerated deterioration process implemented for the compound liquid A2 are calculated by a method similar to that of Example 2a. Results are shown in Table 3.

### Comparative Example 2b

Apart from mixing the BS ink and the ink cleaning liquid B in a mass ratio of 1:1, MV, MN, MA, D50, and change ratios thereof before and after the thermal accelerated deterioration process implemented for the compound liquid B2 are calculated by a method similar to that of Comparative Example 2a. Results are shown in Table 3.

**Table 3**

| Table 3 | Particle diameter (µm) | Before thermal accelerated deterioration | After thermal accelerated deterioration | Change ratio (%) |
|---|---|---|---|---|
| Example 2b | MV | 0.1645 | 0.1544 | -6.140 |
| | MN | 0.1020 | 0.0857 | -15.980 |
| | MA | 0.1353 | 0.1219 | -9.904 |
| | D50 | 0.1428 | 0.1346 | -5.742 |
| Comparative Example 2b | MV | 0.1715 | 0.1595 | -6.997 |
| | MN | 0.1035 | 0.1044 | 0.870 |
| | MA | 0.1419 | 0.1374 | -3.171 |
| | D50 | 0.1552 | 0.1493 | -3.802 |

### Example 2c

Apart from mixing the BS ink and the ink cleaning liquid A in a mass ratio of 9:1, MV, MN, MA, D50, and change ratios thereof before and after the thermal accelerated deterioration process implemented for the compound liquid A2 are calculated by a method similar to that of Example 2a. Results are shown in Table 4.

**Table 4**

| Table 4 | Particle diameter (µm) | Before thermal accelerated deterioration | After thermal accelerated deterioration | Change ratio (%) |
|---|---|---|---|---|
| Example 2c | MV | 0.1661 | 0.1628 | -1.987 |
| | MN | 0.0894 | 0.0885 | -1.007 |
| | MA | 0.1317 | 0.1279 | -2.885 |
| | D50 | 0.1494 | 0.1423 | -4.752 |

As can be affirmed from the results shown in Tables 2 and 3, the particle diameters and their change ratios before and after the thermal accelerated deterioration process are reduced in Examples 2a and 2b compared to Comparative Examples 2a and 2b. In other words, coagulation of the BS ink is restrained when the BS ink is mixed with the ink cleaning liquid in Examples 2a and 2b compared to Comparative Examples 2a and 2b.

It is affirmed from comparison of Examples 2a, 2b, and 2c that as the proportion of the ink cleaning liquid A increases with respect to the BS ink, the particle diameter and the change ratio thereof before and after the thermal accelerated deterioration process reduce. In other words, it is affirmed that as the proportion of the ink cleaning liquid A increases with respect to the BS ink, coagulation of the BS ink can be easily restrained when the ink cleaning liquid and the BS ink are mixed together.

### Example 3a

An ink that contains a black pigment, ethylene glycol monobutyl ether acetate that is the primary solvent, and a dispersive agent is prepared. A compound liquid A3 is prepared by mixing the ink and the ink cleaning liquid A. A mass ratio of the ink and the ink cleaning liquid A in the compound liquid A3 is set to 1:9.

Affirmation is made as to whether the pigment has coagulated in the compound liquid A3 at every point of time, that is, immediately after the ink is mixed with the ink cleaning liquid A, one hour after the ink is mixed with the ink cleaning liquid A, and one day after the ink is mixed with the ink cleaning liquid A. Results are shown in Table 5.

### Examples 3b, 3c, 3d, 3e, 3f, and 3g

Apart from usage of color pigments shown in Table 5, the method is similar to that of Example 3a. By this method, affirmation is made as to whether the pigment has coagulated in the compound liquid A3. Results are shown in Table 5.

**Table 5**

| Table 5 | Pigment | Immediately after mixing | After one hour | After one day |
|---|---|---|---|---|
| Example 3a | Black | No coagulation | No coagulation | No coagulation |
| Example 3b | Magenta | No coagulation | No coagulation | No coagulation |
| Example 3c | Cyan | No coagulation | No coagulation | No coagulation |
| Example 3d | Yellow | No coagulation | No coagulation | No coagulation |
| Example 3e | Red | No coagulation | No coagulation | No coagulation |
| Example 3f | Green | No coagulation | No coagulation | No coagulation |
| Example 3g | Blue | No coagulation | No coagulation | No coagulation |

As can be affirmed from Table 5, the pigment is not coagulated at any point of time even though either of the pigments is used. It is affirmed from the results that the ink cleaning liquid A has a property of suppressing coagulation of pigment components of the ink while cleaning the ink adhering near the nozzle tip or inside of the ink flow path.

### Example 4

The ink used in Examples 3a (black), 3b (magenta), 3c (cyan), and 3d (yellow) is injected 1 ml each into a Petri dish. Thereafter, the Petri dish is heated in an oven at 60°C and solid contents of the ink are obtained by vaporizing the solvents of the ink.

A quantity of 1 ml of the ink cleaning liquid A is dribbled every minute on the solid contents in the Petri dish.

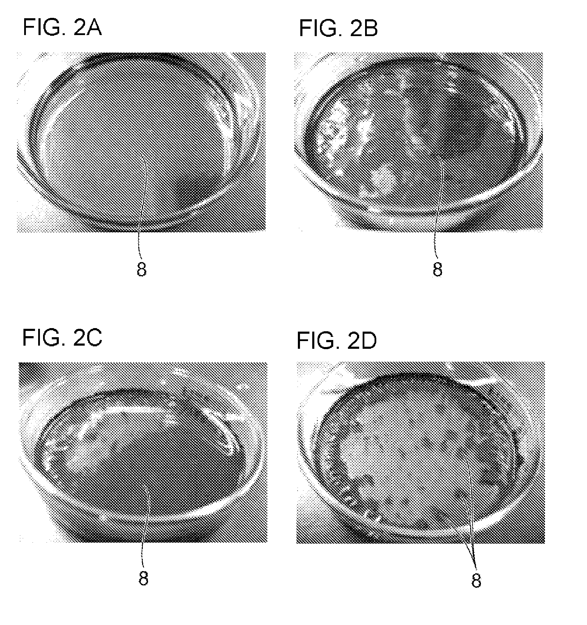

The solid contents in the Petri dish before the ink cleaning liquid A is dribbled are shown in Fig. 2A. The solid contents in the Petri dish after 2 ml of the ink cleaning liquid A is dribbled are shown in Fig. 2B. The solid contents in the Petri dish after 4 ml of the ink cleaning liquid A is dribbled are shown in Fig. 2C. The solid contents after 4 ml of the ink cleaning liquid A is dribbled and liquid component is removed from the Petri dish are shown in Fig. 2D.

As can be affirmed from Figs. 2A to 2D, solid contents 8 of the ink are separated from the Petri dish and dissolved as the ink cleaning liquid A is dribbled, and fluidity of the mixture of the solid contents 8 of the ink and the ink cleaning liquid A has increased. It is affirmed from the results that the ink cleaning liquid A has a property of easily removing the coagulated ink adhering to a surface of the wiper and the drain flow path of the flushed material that is flushed from the wiper.

### Example 5

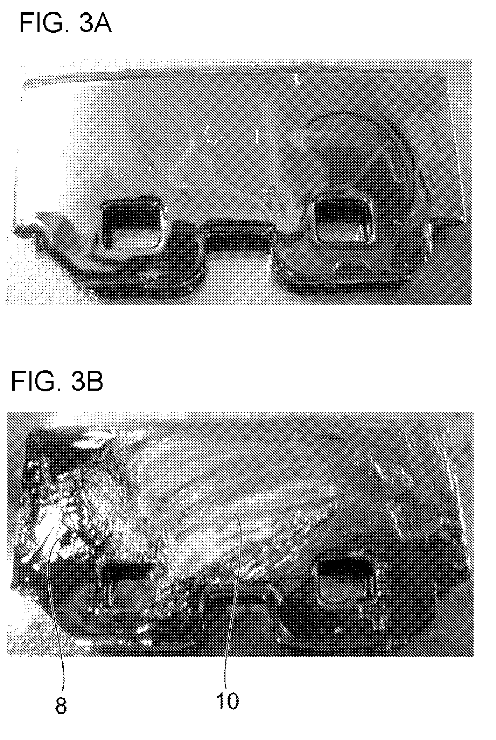

A quantity of 2 ml of a mixture of the ink (hereinafter, referred to as compound ink) used in Examples 3a (black), 3b (magenta), 3c (cyan), and 3d (yellow) is injected into the Petri dish. Thereafter, a wiper mounted on a JV33 series inkjet device manufactured by Mimaki Engineering Co., Ltd. is immersed in the compound ink. The Petri dish is then heated in an oven at 60°C and the wiper with the solid contents of the ink adhering thereto is obtained by vaporizing the solvents of the ink as shown in Fig. 3A.

A quantity of 0.1 ml of the ink cleaning liquid A is dribbled using a syringe on the wiper with the solid contents of the ink adhering thereto. Affirmation is made as to whether the solid contents of the ink are removed from the wiper by lightly wiping with a cotton swab the portion of the wiper on which the ink cleaning liquid A is dribbled. Results are shown in Fig. 3B.

As shown in Fig. 3B, the solid contents of the ink are removed from a portion 10 of the wiper on which the ink cleaning liquid A is dribbled.

### Example 6

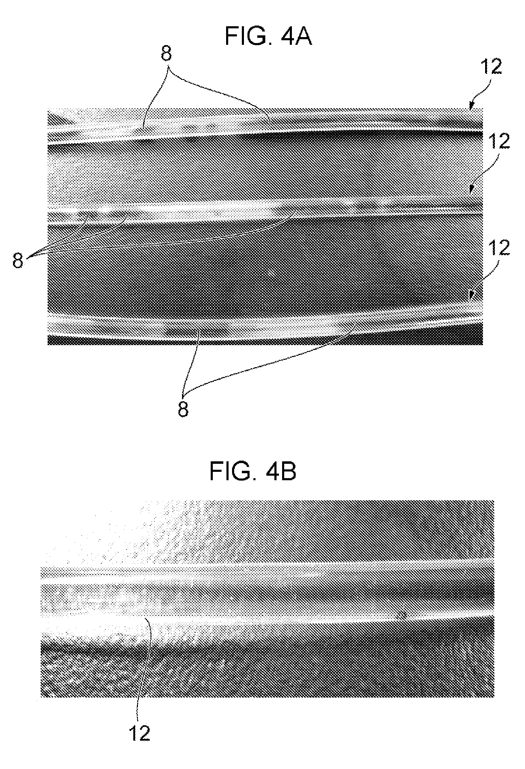

A quantity of 1 ml of the compound ink is passed through a transparent tube and the tube is heated in an oven at 60°C. Furthermore, the solid contents 8 of the ink are made to adhere to inner walls of a tube 12 as shown in Fig. 4A by vaporizing the solvents of the ink. The tube corresponds to the path between the ink cartridge and the inkjet head or the drain flow path of the flushed material that is flushed from the wiper.

The ink cleaning liquid A is passed 1 ml at a time through the tube 12 with the solid contents 8 of the ink adhering to the inner walls. The tube 12 after 15 ml of the ink cleaning liquid A is passed through it is shown in Fig. 4B.

As can be affirmed from Fig. 4B, the solid contents 8 of the ink adhering to the inner walls of the tube 12 are cleaned with the ink cleaning liquid A.

It is affirmed from the results of Examples 3 to 6 that the ink cleaning liquid A is suitable for filling in a cleaning liquid cartridge of the JV33 series inkjet device.

### INDUSTRIAL APPLICABILITY

According to the present invention described above, the ink cleaning liquid can be provided that has an excellent cleaning capability, and that can suppress coagulation of the ink when it is mixed with the ink and does not corrode the device member easily.

## Claims

1. An ink cleaning liquid comprising:
ethylene glycol monobutyl ether acetate; and
a surfactant.

2. The ink cleaning liquid according to claim 1, the ink cleaning liquid being an ink cleaning liquid for cleaning an ink that contains ethylene glycol monobutyl ether acetate and a pigment.

3. The ink cleaning liquid according to claim 1 or 2, wherein a surfactant content is 0.1 mass % to 5 mass %.

4. The ink cleaning liquid according to any one of claims 1 to 3, wherein the surfactant is an acetylene glycol surfactant.
